# EUROPEAN PATENT APPLICATION

(11) **EP 3 421 333 A1**
(43) Date of publication of application: **02.01.2019**
(21) Application number: 18756364.8
(22) Date of filing: 24.01.2018
(51) Int. Cl.: B62D 25/06

(54) **SOLAR THIN-FILM ASSEMBLY FOR CAR ROOF AND SOLAR CAR**

(30) Priority: 24.03.2017 CN 201720295889 U
(71) Applicant: Beijing Apollo Ding Rong Solar Technology Co., Ltd., Beijing 100176 (CN)
(72) Inventor: ZHANG, Dapeng, Beijing 100176 (CN); WANG, Jing, Beijing 100176 (CN); TONG, Qiang, Beijing 100176 (CN)
(74) Representative: Meissner Bolte Partnerschaft mbB
(86) International application number: PCT/CN2018/073913
(87) International publication number: WO 2018/171327

(57) **Abstract**

A thin-film solar module for a vehicle roof and a solar car are provided, wherein the thin-film solar module includes: a holder for being fixed to a vehicle roof, the holder being fixedly provided with a holding plate, the holding plate having a single curved top surface; a thin-film solar cell fixedly attached to the top surface; and a pressing strip by which the periphery of the thin-film solar cell is pressed against the holding plate. The thin-film solar module for a vehicle roof provided in present disclosure completely solves the problem that the thin-film solar cell cannot be installed on a vehicle roof with a double curved surface, and allows an extended service life after installation, it has a simple structure, and does not affect the overall appearance of a vehicle, and therefore may be optionally installed on a vehicle.

## Description

### Technical Field

The present disclosure relates to the technologies of new energy vehicles, and in particular to a thin-film solar module for a vehicle roof and a solar car.

### Background Art

At present, the vehicle roofs of four-wheel low-speed vehicles and cars are all 3D curved surfaces (also commonly known as a "double curved surface" (Hypoid)), while a thin-film solar module can only be bent into a single curved surface, and if the thin-film solar module is installed on a double curved surface of a vehicle roof, the thin-film solar module will become warped and wrinkled, resulting in a problem that it cannot be installed flatly. Moreover, the wind resistance increases when the car is running, which also increases the risk of detachment of the thin-film solar module from the vehicle roof and affects the service life of the thin-film solar module after installation.

### Summary

An object of the present disclosure is to provide a thin-film solar module for a vehicle roof and a solar car, so as to solve the problems in the prior art and improves the quality of installation of the thin-film solar module.

The present disclosure provides a thin-film solar module for a vehicle roof, which includes:
a holder for being fixed to a vehicle roof, wherein the holder is fixedly provided with a holding plate, and the holding plate has a single curved top surface;
a thin-film solar cell fixedly attached to the top surface; and
a pressing strip wherein a periphery of the thin-film solar cell is pressed against the holding plate by the pressing strip.

In the thin-film solar module for a vehicle roof as described above, it is optional that the thin-film solar cell is in a single curved surface structure having a bottom surface adapted to the single curved top surface of the holding plate.

In the thin-film solar module for a vehicle roof as described above, it is optional that the holder comprises: a front supporting strip, a rear supporting strip, a left supporting strip, and a right supporting strip.

In the thin-film solar module for a vehicle roof as described above, it is optional that the holder further comprises a supporting member, wherein two ends of the front supporting strip are connected with the left supporting strip and the right supporting strip by the supporting member, respectively, and two ends of the rear supporting strip are connected with the left supporting strip and the right supporting strip by the supporting member, respectively; and the supporting strips are connected to the supporting member to form the holder of frame style.

In the thin-film solar module for a vehicle roof as described above, it is optional that the supporting member is fixedly connected with the front supporting strip, the rear supporting strip, the left supporting strip, and the right supporting strip by screws, respectively.

In the thin-film solar module for a vehicle roof as described above, it is optional that the supporting member has an extension portion extending toward the vehicle roof.

In the thin-film solar module for a vehicle roof as described above, it is optional to further comprise a fastening screw and an L-shaped supporting angle piece, wherein the L-shaped supporting angle piece comprises a top plate and a side plate, the top plate is provided with a threaded hole, and the side plate is fixed to an inner side of the holder; and
the fastening screw is engaged with the threaded hole passing through the pressing strip.

In the thin-film solar module for a vehicle roof as described above, it is optional that the top plate and the side plate are formed by integrally bending a flat plate.

In the thin-film solar module for a vehicle roof as described above, it is optional that the top plate and the side plate are fixed together by being spliced.

In the thin-film solar module for a vehicle roof as described above, it is optional that an angle between the top plate and the side plate is an obtuse angle.

In the thin-film solar module for a vehicle roof as described above, it is optional that the holding plate is provided with a notch, and the fastening screw passes through the pressing strip, and then bypasses the thin-film solar cell and the holding plate and passes through the notch, to be engaged with the threaded hole.

In the thin-film solar module for a vehicle roof as described above, it is optional that the pressing strip comprises a front pressing strip, a rear pressing strip, a left pressing strip, and a right pressing strip, wherein the front pressing strip, rear pressing strip, left pressing strip, and right pressing strip are disposed on the periphery of the thin-film solar cell.

The present disclosure further provides a solar car comprising a vehicle roof with a double curved surface, wherein the solar car further comprises a thin-film solar module for a vehicle roof provided in the present disclosure, and the holder is fixed on the vehicle roof.

In the thin-film solar module for a vehicle roof and the solar car provided in the present disclosure, a holder is disposed to be fixed to the vehicle roof, a holding plate is disposed on the holder, a thin-film solar cell is attached to the holding plate, it is optional that the thin-film solar cell is adhered to the holding plate by an back adhesive, and the pressing strip is disposed on the periphery of the holding plate, and the pressing strip presses against four sides of the thin-film solar cell after the installation is finished. In the natural environment, even if an edge of the thin-film solar cell is detached from the holding plate due to aging of the edge of the back adhesive, since the pressing strip presses against the four sides of the thin-film solar cell, the cell will not curl up such that the continued aging of the surface of the back adhesive is mitigated. Thus, the thin-film solar module for a vehicle roof provided in present disclosure completely solves the problem that the thin-film solar cell cannot be installed on a vehicle roof with a double curved surface, and allows an extended service life after installation, it has a simple structure, and does not affect the overall appearance of a vehicle, and therefore may be optionally installed on a vehicle.

The thin-film solar module for a vehicle roof provided in the present disclosure is convenient for maintenance. Since the pressing strip presses against the thin-film solar module and the holding plate, it is only necessary to remove the pressing strip and replace the module even if the module is damaged.

In addition, since both the holding plate and the thin-film solar module are optionally of a single curved surface structure, the thin-film solar module and the holding plate are closely and seamlessly attached together, and the curved surface structure can reduce the wind resistance when the vehicle is moving.

### Brief Description of Drawings

FIG. 1 is a schematic structural view of a thin-film solar module for a vehicle roof according to an embodiment of the present disclosure.
FIG. 2 is a schematic view showing a state in which a thin-film solar module for a vehicle roof, according to an embodiment of the present disclosure, is fixed on a vehicle roof.
FIG. 3 is a schematic exploded view of FIG. 1.
FIG. 4 is a schematic structural view of a solar car according to an embodiment of the present disclosure.

### Description of the Reference Numerals:

1- holder; 11- front supporting strip; 12- rear supporting strip; 13-left supporting strip; 14- right supporting strip; 15- supporting member; 151-extension portion; 2- holding plate; 21- notch; 3- thin-film solar cell; 4- pressing strip; 41- front pressing strip; 42- rear pressing strip; 43- left pressing strip; 44-right pressing strip; 5- screw; 6- supporting angle piece; 7- fastening screw; 8-vehicle roof

### Detailed Description of Embodiments

Embodiments of the present disclosure are described in detail below, and examples of the embodiments are illustrated in the accompanying drawings, throughout which the same or similar reference numerals refer to the same or similar elements or elements having the same or similar functions. The embodiments described below with reference to the accompanying drawings are exemplary, and are intended only to explain the present disclosure but are not to be construed as limiting the present disclosure.

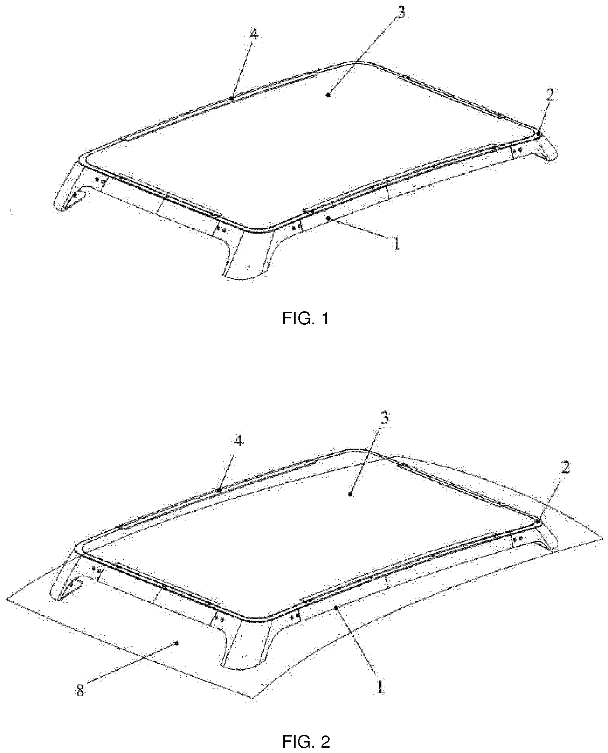

FIG. 1 is a schematic structural view of a thin-film solar module for a vehicle roof according to an embodiment of the present disclosure. The embodiment of the present disclosure provides a thin-film solar module for a vehicle roof, comprising a holder 1, a holding plate 2, a thin-film solar cell 3, and a pressing strip 4.

In the above, the holder 1 is used for being fixed on the roof of a solar car, as shown in FIG. 2. FIG. 2 is a schematic view showing a state in which a thin-film solar module for a vehicle roof, according to an embodiment of the present disclosure, is fixed on a vehicle roof. The vehicle roof 8 of the solar car is a vehicle roof with a double curved surface. The holding plate 2 is fixedly disposed on the holder 1, the holding plate 2 has a single curved top surface, and the thin-film solar cell 3 is fixedly attached to the top surface, specifically by using a back adhesive, and the thin-film solar cell 3 is attached to the top surface of the holding plate 2 by the back adhesive. The thin-film solar cell 3 is pressed against the holding plate 2 by the pressing strip 4.

It is optional that the thin-film solar cell 3 is in a single curved surface structure having a bottom surface adapted to the single curved top surface of the holding plate 2.

In the thin-film solar module for a vehicle roof provided in the embodiment of the present disclosure, the holding plate 2 is fixed on the vehicle roof 8 by the holder 1, and the above-mentioned pressing strip 4 is disposed on the periphery of the holding plate 2, and the pressing strip 4 presses against four sides of the thin-film solar cell 3 after the installation is finished. In the natural environment, even if an edge of the thin-film solar cell 3 is detached from the holding plate 2 due to aging of the edge of the back adhesive, thermal expansion or cooling contraction of the back adhesive, a failure of the adhesive, or the like, since the pressing strip 4 presses against the four sides of the thin-film solar cell 3, the cell will not curl up, such that the continued aging of the surface of the back adhesive is mitigated. Thus, the thin-film solar module for a vehicle roof provided in the embodiment of the present disclosure completely solves the problem that the thin-film solar cell 3 cannot be installed on a vehicle roof with a double curved surface, and allows an extended service life after installation, it has a simple structure, and does not affect the overall appearance of a vehicle, and therefore may be optionally installed on a vehicle.

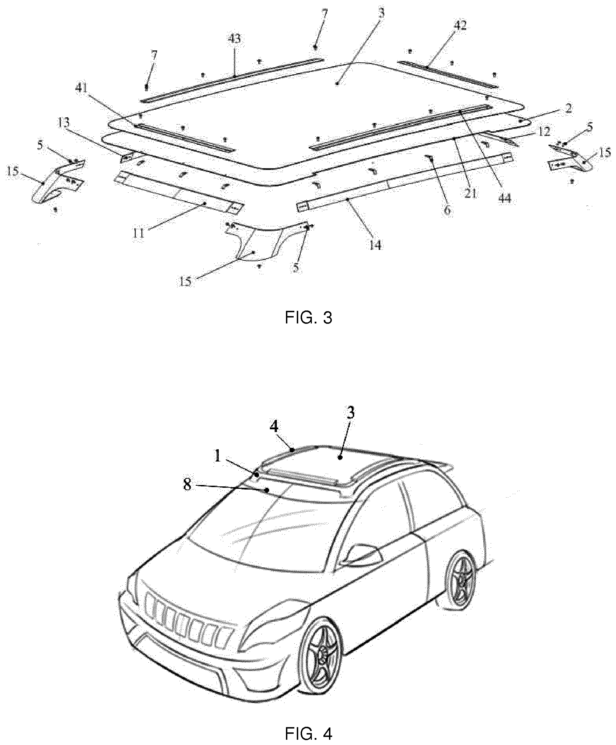

FIG. 3 is a schematic exploded view of FIG. 1. As shown in FIG. 3, it is optional that the holder 1 comprises a front supporting strip 11, a rear supporting strip 12, a left supporting strip 13, and a right supporting strip 14. Further, the holder 1 may further comprise a supporting member 15, wherein two ends of the front supporting strip 11 are connected with the left supporting strip 13 and the right supporting strip 14 by the supporting member 15, respectively, two ends of the rear supporting strip 12 are connected with the left supporting strip 13 and the right supporting strip 14 by the supporting member 15, respectively, and the supporting strips are connected to the supporting member 15 to form a holder 1 of frame style. Referring to and as shown in FIG. 3, the supporting member 15 may have various structures. In the present embodiment, it is optional that the supporting member 15 has an extension portion 151 extending toward the vehicle roof 8, so that after the holder 1 is fixed on the vehicle roof 8, there is a certain distance between the holding plate 2 and the vehicle roof 8 to facilitate adapting to the installation of the double curved surface structure of the vehicle roof 8.

The supporting member 15 and the front supporting strip 11, the rear supporting strip 12, the left supporting strip 13 and the right supporting strip 14 may be connected in various manners. In the present embodiment, the supporting member 15 is fixedly connected with the front supporting strip 11, the rear supporting strip 12, the left supporting strip 13, and the right supporting strip 14 by screws 5, respectively.

With continued reference to FIG. 3, the thin-film solar module for a vehicle roof provided in the embodiment of the present disclosure further comprises an L-shaped supporting angle piece 6 and a fastening screw 7, wherein the L-shaped supporting angle piece 6 comprises a top plate and a side plate, the top plate is provided with a threaded hole, and the side plate is fixed to an inner side of the holder 1, optionally by welding. The fastening screw 7 is engaged with the threaded hole passing through the pressing strip 4. The above-mentioned supporting angle piece 6 may be formed by integrally bending a flat plate, or may also be formed by splicing two plates, that is to say, the top plate and the side plate are fixed by being spliced. Optionally, an angle between the top plate and the side plate is an obtuse angle. Such a structure facilitates a balanced installation of the pressing strip and is balanced and stable after the installation of the supporting angle piece 6.

It is optional that the holding plate 2 is provided with a notch 21, and the fastening screw 7 passes through the pressing strip 4, and then bypasses the thin-film solar cell 3 and the holding plate 2 and passes through the notch 21, to be engaged with the threaded hole. The arrangement of the notch 21 enables the fastening screw 7 to bypass the thin-film solar cell 3 and the holding plate 2, so that it is unnecessary to make holes in the thin-film solar cell 3 and the holding plate 2, and the tight pressing of the thin-film solar cell 3 is achieved while ensuring the strength of the thin-film solar cell 3 and the holding plate 2.

The pressing strip 4 may be of an integrated type, or may be of a segmented type. In the present embodiment, the pressing strip 4 is optionally provided as a segmented type, comprising a front pressing strip 41, a rear pressing strip 42, a left pressing strip 43, and a right pressing strip 44, wherein the front pressing strip 41, the rear pressing strip 42, the left pressing strip 43, and the right pressing strip 44 are disposed on the periphery of the thin-film solar cell 3. The segmented pressing strips can be installed and removed conveniently, thereby facilitating the maintenance and replacement.

FIG. 4 is a schematic structural view of a solar car according to an embodiment of the present disclosure. The embodiment of the present disclosure further provides a solar car, comprising a vehicle roof 8 with a double curved surface, wherein the solar car further comprises a thin-film solar module for a vehicle roof provided in any embodiment of the present disclosure, and the above-mentioned holder 1 is fixed on the vehicle roof 8. The holder 1 is provided with a holding plate 2, and a thin-film solar cell 3 is attached to the holding plate 2 and fixed by a pressing strip 4.

The structures, features, and functions and effects of the present disclosure are described in detail above according to the embodiments shown in the drawings. The above description is only illustrative of preferred embodiments of the present disclosure, but the present disclosure does not limit the scope of implementation as shown in the drawings. Any changes made according to the concept of the present disclosure, or equivalent embodiments modified with equivalent variations, without departing from the spirit covered by the specification and the drawings, shall fall within the scope of protection of the present disclosure.

## Claims

1. A thin-film solar module for a vehicle roof, **characterized by** comprising:
a holder for being fixed to a vehicle roof, wherein the holder is fixedly provided with a holding plate, and the holding plate has a single curved top surface;
a thin-film solar cell fixedly attached to the top surface; and
a pressing strip wherein a periphery of the thin-film solar cell is pressed against the holding plate by the pressing strip.

2. The thin-film solar module for a vehicle roof according to claim 1, **characterized in that** the thin-film solar cell is in a single curved surface structure having a bottom surface adapted to the single curved top surface of the holding plate.

3. The thin-film solar module for a vehicle roof according to claim 1, **characterized in that** the holder comprises: a front supporting strip, a rear supporting strip, a left supporting strip, and a right supporting strip.

4. The thin-film solar module for a vehicle roof according to claim 3, **characterized in that** the holder further comprises a supporting member, two ends of the front supporting strip are connected to the left supporting strip and the right supporting strip by the supporting member, respectively, and two ends of the rear supporting strip are connected to the left supporting strip and the right supporting strip by the supporting member, respectively; and the supporting strips are connected to the supporting member to form the holder of frame style.

5. The thin-film solar module for a vehicle roof according to claim 4, **characterized in that** the supporting member is fixedly connected to the front supporting strip, the rear supporting strip, the left supporting strip, and the right supporting strip by screws, respectively.

6. The thin-film solar module for a vehicle roof according to claim 4, **characterized in that** the supporting member has an extension portion extending toward the vehicle roof.

7. The thin-film solar module for a vehicle roof according to claim 4, **characterized by** further comprising an L-shaped supporting angle piece and a fastening screw, wherein the L-shaped supporting angle piece comprises a top plate and a side plate, the top plate is provided with a threaded hole, the side plate is fixed to an inner side of the holder; and the fastening screw is engaged with the threaded hole passing through the pressing strip.

8. The thin-film solar module for a vehicle roof according to claim 7, **characterized in that** the top plate and the side plate are formed by integrally bending a flat plate.

9. The thin-film solar module for a vehicle roof according to claim 7, **characterized in that** the top plate and the side plate are fixed together by being spliced.

10. The thin-film solar module for a vehicle roof according to any one of claims 7 to 9, **characterized in that** an angle between the top plate and the side plate is an obtuse angle.

11. The thin-film solar module for a vehicle roof according to claim 7, **characterized in that** the holding plate is provided with a notch, and the fastening screw passes through the pressing strip, bypasses the thin-film solar cell and the holding plate and passes through the notch, to be engaged with the threaded hole.

12. The thin-film solar module for a vehicle roof according to claim 1, **characterized in that** the pressing strip comprises a front pressing strip, a rear pressing strip, a left pressing strip, and a right pressing strip, and the front pressing strip, the rear pressing strip, the left pressing strip, and the right pressing strip are disposed on the periphery of the thin-film solar cell.

13. A solar car comprising a vehicle roof with a double curved surface, **characterized in that** the solar car further comprises a thin-film solar module for a vehicle roof according to any one of claims 1 to 12, and the holder is fixed on the vehicle roof.
